(19) Europäisches Patentamt
European Patent Office
Office européen des brevets

(11) **EP 3 184 318 B1**

(12) **EUROPÄISCHE PATENTSCHRIFT**

(45) Veröffentlichungstag und Bekanntmachung des Hinweises auf die Patenterteilung:
**05.07.2023   Patentblatt 2023/27**

(21) Anmeldenummer: **16002701.7**

(22) Anmeldetag: **20.12.2016**

(51) Internationale Patentklassifikation (IPC):
**B42D 25/324** *(2014.01)*    **B42D 25/328** *(2014.01)*
**B42D 25/373** *(2014.01)*    **G02B 5/08** *(2006.01)*
**G02B 5/18** *(2006.01)*

(52) Gemeinsame Patentklassifikation (CPC):
**G02B 5/1857; B42D 25/29; B42D 25/324; B42D 25/328; B42D 25/346; B42D 25/435; G02B 5/0808; G02B 5/18; G02B 5/1861**

(54) **OPTISCH VARIABLES SICHERHEITSELEMENT MIT REFLEKTIVEM FLÄCHENBEREICH**

OPTICALLY VARIABLE SECURITY ELEMENT HAVING REFLECTIVE SURFACE AREA

ÉLÉMENT DE SÉCURITÉ OPTIQUE VARIABLE AYANT UNE ZONE DE SURFACE RÉFLÉCHISSANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2015   DE 102015016713**

(43) Veröffentlichungstag der Anmeldung:
**28.06.2017   Patentblatt 2017/26**

(73) Patentinhaber: **Giesecke+Devrient Currency Technology GmbH**
**81677 München (DE)**

(72) Erfinder:
• **Scherer, Maik Rudolf Johann**
**82491 Grainau (DE)**
• **Schinabeck, Josef**
**82467 Garmisch-Partenkirchen (DE)**

(74) Vertreter: **Giesecke + Devrient IP**
**Prinzregentenstraße 161**
**81677 München (DE)**

(56) Entgegenhaltungen:
EP-A1- 2 228 672      EP-A1- 2 597 431
DE-A1-102010 049 831   US-A1- 2013 093 172
US-A1- 2013 099 474    US-A1- 2015 192 897

• HANS LOCHBIHLER: "Colored images generated by metallic sub-wavelength gratings", OPTICS EXPRESS, Bd. 17, Nr. 14, 2. Juli 2009 (2009-07-02), Seiten 12189-12196, XP055365719, DOI: https://doi.org/10.1364/OE.17.012189

**Beschreibung**

Die Erfindung betrifft ein optisch variables Sicherheitselement zur Absicherung von Wertgegenständen, mit einem Träger mit einem reflektiven Flächenbereich, dessen Ausdehnung eine x-y-Ebene und eine darauf senkrecht stehende z-Achse definiert. Die Erfindung betrifft auch ein Verfahren zur Herstellung eines solchen Sicherheitselements und einen entsprechend ausgestatteten Datenträger.

Datenträger, wie etwa Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, Kreditkarten, Gesundheitskarten, sowie Produktsicherungselemente wie Etiketten, Siegel, Verpackungen und dergleichen. Der Begriff "Datenträger" schließt im Folgenden alle derartigen Gegenstände, Dokumente und Produktsicherungsmittel ein.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

In letzter Zeit werden dabei oft Sicherheitselemente mit kinematischen/stereographischen Effekten auf Basis von Mikrospiegelstrukturen eingesetzt. Typischerweise erzeugen die Mikrospiegelstrukturen wegen der Größe der Mikrospiegel oberhalb von 5 $\mu$m selbst keine Farbeffekte, eine Farbgebung kann jedoch durch eine zusätzliche farbkippende Beschichtung bereitgestellt werden. Die Erzeugung solcher farbkippender Beschichtungen erfolgt in der Regel durch Vakuumbedampfungsverfahren und ist daher zeit- und kostenintensiv. Auch ist die Bandbreite der möglichen Farbeffekte beschränkt. So ist beispielsweise die Farbänderung einer farbkippenden Beschichtung stets isotrop, also unabhängig von der Kipprichtung des Sicherheitselements.

Aus der Druckschrift DE 10 2010 049 831 A1 ist ein optisch variables Flächenmuster bekannt, das in zumindest drei Teilbereiche mit jeweils mehreren Pixelabschnitten aufgeteilt ist, wobei ein erster und ein zweiter der Teilbereiche bei Kippung um eine erste Achse zwei verschiedene Ansichten eines ersten Motivs darbieten und ein dritter der Teilbereiche bei Kippung um eine zweite Achse eine weitere Ansicht des ersten Motivs oder eine Ansicht eines zweiten Motivs darbietet. Der erste und zweite Teilbereich bieten die zwei verschiedenen Ansichten so dar, dass bei einem Betrachter ein dreidimensionaler Bildeindruck entsteht. Durch Überlagerung von in den Pixelabschnitten vorliegenden Facetten mit sub-Wellenlängenstrukturen lässt sich eine farbige Darstellung erzeugen.

Die Druckschrift US 2013/093172 A1 beschreibt ein Sicherheitselement mit einem Träger, der einen Flächenbereich aufweist, der in eine Vielzahl von Pixeln, die jeweils zumindest eine optisch wirksame Facette umfassen, aufgeteilt ist. Die die Facetten sind dabei so orientiert, dass für einen Betrachter der Flächenbereich als gegenüber seiner tatsächlichen Raumform vor- und/ oder zurückspringende Fläche wahrnehmbar ist.

Ausgehend davon liegt der Erfindung die Aufgabe zugrunde, ein optisch variables Sicherheitselement der eingangs genannten Art anzugeben, das kostengünstig mit farbgebenden Strukturen ausgestattet werden kann. Idealerweise sollen die farbgebenden Strukturen zudem ein attraktives optisches Erscheinungsbild aufweisen, dem Designer einen großen Gestaltungsspielraum ermöglichen und dem Sicherheitselement hohe Fälschungssicherheit verleihen.

Diese Aufgabe wird durch die Merkmale der unabhängigen Ansprüche gelöst. Weiterbildungen der Erfindung sind Gegenstand der abhängigen Ansprüche.

Gemäß der Erfindung ist bei einem gattungsgemäßen Sicherheitselement vorgesehen, dass

-    der reflektive Flächenbereich teildurchlässig ist und eine Beugungsstruktur aufweist, die durch eine additive Überlagerung einer makroskopisch oder mikroskopisch feinen Reliefstruktur und einem mikroskopisch feinen Perforationsmuster gebildet ist, wobei die Beugungsstruktur durch eine Strukturfunktion S(x,y), die Reliefstruktur durch eine Relieffunktion R(x,y), das Perforationsmuster durch eine Musterfunktion P(x,y), und die additive Überlagerung durch

$$S(x,y) = R(x,y) + P(x,y)$$

beschrieben ist,

-    das Perforationsmuster durch eine reflektierende Schicht mit einer Vielzahl mikroskopisch feiner Perforationen gebildet ist, die aufgrund der additiven Überlagerung dem Verlauf der Reliefstruktur folgt und eine lichtbeugende oder lichtstreuende optisch wirksame und teildurchlässige Beschichtung der Reliefstruktur darstellt, und

- die die Reliefstruktur beschreibende Relieffunktion R(x,y) wenigstens stückweise stetig ist, keine periodische Dreiecks- oder Rechtecksfunktion darstellt und sich im Vergleich zur Musterfunktion P(x,y) nur langsam ändert.

In bevorzugten Ausgestaltungen ist die Relieffunktion R(x,y) dabei eine symmetrische oder asymmetrische Rasterfunktion mit einer Rasterperiode in zumindest einer Raumrichtung zwischen 1 $\mu$m und 200 $\mu$m, vorzugsweise zwischen 5 $\mu$m und 200 $\mu$m. Als Rasterfunktionen werden in dieser Beschreibung Funktionen bezeichnet, bei denen Rasterelemente gleicher Grundform in einem regelmäßigen ein- oder zweidimensionalen Raster angeordnet sind. Die an unterschiedlichen Orten des Rasters angeordneten Rasterelemente unterschieden sich insbesondere nur in ihrer Höhenskalierung, weisen aber ansonsten alle dieselbe Form auf. Beschreibt beispielsweise die Funktion sg(x,y) die Form eines einzelnen Sägezahns mit Länge 1 und Höhe 1, so stellt

$$R(x,y) = \sum_{i=1..n} h_i * sg(x- i*l,y)$$

eine Rasterfunktion von n in x-Richtung hintereinander angeordneten Sägezähnen dar, wobei die Sägezähne alle dieselbe Grundform, allerdings unterschiedliche Höhe $h_i$, i=1..n, aufweisen.

Beschreibt allgemein die Funktion f(x,y) ein beliebiges Rasterelement der Länge 1, Breite b und Höhe 1, so dass also f(x,y) $\neq$ 0 nur im Flächenbereich [0,1] $\times$ [0,b] gilt und max(f(x,y)) = 1 ist, so stellt

$$R(x,y) = \sum_{i=1..n, j=1..m} h_{ij} * f(x- i*l,y-j*b)$$

eine Rasterfunktion aus n*m solchen Rasterelementen, jeweils mit Höhe $h_{ij}$, i=1..n, j=1..m dar.

Wie leicht zu erkennen, sind die angesprochenen Rasterfunktionen bzw. die dadurch beschriebenen Rasterstrukturen ein räumliches Analogon zu gerasterten Halbtonbildern, bei denen die Bildpunkte (Pixel) alle dieselbe Form und Größe aufweisen, aber unterschiedliche Helligkeitswerte haben. Ein Rasterelement f(x,y) einer Relieffunktion R(x,y) entspricht dabei der Umrissform der Pixel und die Höhe $h_{ij}$ der Rasterelemente entspricht dem Helligkeitswert eines Pixels (i, j). Die Rasterfunktionen stellen auch eine Verallgemeinerung periodischer Funktionen dar, bei denen zwar der Funktionsverlauf innerhalb einer Periode stets die gleiche Form hat, unterschiedliche Perioden aber unterschiedliche Skalierung in z-Richtung aufweisen können. Sind die Höhenwerte $h_{ij}$ einer Rasterfunktion R(x,y) alle gleich, so ist die Rasterfunktion periodisch mit Periodenlänge 1 in x-Richtung bzw. b in y-Richtung.

In einer alternativen, ebenfalls vorteilhaften Ausgestaltung ist die Relieffunktion R(x,y) eine aperiodische Funktion, bei der in zumindest einer Raumrichtung benachbarte Extremwerte um wenigstens 1 $\mu$m und höchstens 200 $\mu$m voneinander entfernt sind, vorzugsweise um wenigstens 5 $\mu$m und höchstens 200 $\mu$m.

In beiden Varianten weist die Reliefstruktur mit Vorteil eine Strukturhöhe von 40 $\mu$m oder weniger auf. Die maximale Strukturhöhe beträgt mit Vorteil 5 $\mu$m, vorzugsweise 2 $\mu$m.

Erfindungsgemäß enthält die Reliefstruktur eine Vielzahl reflektiver Facetten, deren Neigung gegen die x-y-Ebene jeweils durch die Angabe eines normalisierten Normalenvektors bestimmt ist. Beispielsweise können die flachen Teilflächen der oben genannten Sägezähne einer sägezahnförmigen Reliefstruktur derartige Facetten bilden. Ohne das Perforationsmuster wirken die Facetten als achromatisch reflektierende Mikrospiegel, mit den Perforationsmustern zeigen sie einen zusätzlichen chromatischen Effekt, wie weiter unten genauer beschrieben.

In einer anderen vorteilhaften Gestaltung enthält die Reliefstruktur eine reflektive Fresnel-Struktur mit variierender Gitterperiode. Einzelheiten zu solchen, insbesondere gewölbt erscheinenden reflektiven Fresnel-Strukturen können beispielsweise der Druckschrift EP 1 562 758 B1 entnommen werden, deren Offenbarungsgehalt insoweit in die vorliegende Anmeldung aufgenommen wird.

Durch den gegenseitigen Abstand und die Größe der mikroskopisch feinen Perforationen kann die Transmission der Beschichtung und damit auch des Flächenbereichs in weiten Bereichen nach Wunsch eingestellt werden. Mit zunehmendem Flächenanteil der Perforationen und damit zunehmender Transmission nimmt allerdings die Effizienz der in Reflexion sichtbaren Beugung bzw. Streuung ab. Der Flächenanteil der Perforationen wird daher vorteilhaft entsprechend den Anforderungen an die Transmission und die Reflexionseffizienz gewählt.

Das Perforationsmuster ist ein ein- oder zweidimensionales Gitter, das bevorzugt in zumindest einer Raumrichtung eine Gitterperiode zwischen 0,1 $\mu$m und 10 $\mu$m aufweist. Das Perforationsmuster bildet mit Vorteil ein Drahtgitter, ein quadratisches oder hexagonales Lochgitter, oder ein quadratisches oder hexagonales Punktgitter.

Ist die Relieffunktion R(x,y) eine Rasterfunktion mit Rasterperioden 1 bzw. b und das Perforationsmuster ein Gitter mit Gitterperioden px bzw. py, so bedeutet eine langsame Änderung der Relieffunktion R(x,y) im Vergleich zur Musterfunktion des Perforationsmusters, dass die Rasterperioden 1 bzw. b groß gegen die Gitterperioden px bzw. py sind, insbesondere mindestens 4-mal, bevorzugt mindestens 10-mal oder sogar mindestens 20-mal so groß wie diese sind.

Erfindungsgemäß weist das Perforationsmuster eine Vorzugsrichtung auf, welche durch den oder einen Gittervektor des Gitters gegeben ist und die parallel zur x-Achse liegt.

Die reflektierende Schicht des Perforationsmusters ist vorteilhaft eine Schicht aus Metall, einer Metalllegierung oder einem hochbrechenden Material, insbesondere eine Schicht aus Al, Ni, Co, Au, Ag, Cu, ZnS, $TiO_2$, ZnO oder $SiO_2$. In der Regel ist die Dicke der reflektierenden Schicht des Perforationsmusters wesentlich kleiner als die Strukturhöhe der Reliefstruktur. Die reflektierende Schicht weist vorteilhaft eine Schichtdicke unterhalb von 2 $\mu$m, typischerweise von nur 10 nm bis 300 nm auf. Im Bereich außerhalb der Perforationen ist die Schichtdicke des Perforationsmusters zudem mit Vorteil konstant, also $P(x,y) = 0$ in den Perforationen und $P(x,y) = k$ außerhalb der Perforationen, so dass das Perforationsmuster den Höhenverlauf der Reliefstruktur nicht verändert.

In einer Weiterbildung der Erfindung enthält der reflektive teildurchlässige Flächenbereich zumindest zwei Teilbereiche mit jeweils einer Beugungsstruktur der genannten Art, wobei

- die Reliefstrukturen der Beugungsstrukturen in den Teilbereichen paarweise verschieden sind,
- die Perforationsmuster der Beugungsstrukturen jeweils eine Vorzugsrichtung aufweisen und
- die jeweiligen Vorzugsrichtungen der Perforationsmuster aller Teilbereiche zueinander parallel sind.

Die Perforationsmuster sind dabei mit Vorteil jeweils in Form desselben ein- oder zweidimensionalen Gitters ausgebildet, so dass die Gittervektoren und damit die Vorzugsrichtungen der Perforationsmuster sogar gleich sind.

Bei einer vorteilhaften Ausgestaltung enthält der Flächenbereich einen ersten Teilbereich mit einer ersten Beugungsstruktur und einen zweiten Teilbereich mit einer zweiten Beugungsstruktur, wobei die zweite Beugungsstruktur spiegelbildlich zur ersten Beugungsstruktur ausgebildet ist. Insbesondere ist dabei die Reliefstruktur der ersten Beugungsstruktur spiegelbildlich zur Reliefstruktur der zweiten Beugungsstruktur ausgebildet, also

$$R_1(x,y) = R_2(-x,y) + (x_0,y_0) \text{ oder } R_1(x,y) = R_2(x,-y) + (x_0,y_0)$$

mit einem Verschiebungsvektor $(x_0,y_0)$. Die Perforationsmuster der Beugungsstrukturen können insbesondere ebenfalls spiegelbildlich oder auch gleich sein.

Der reflektive teildurchlässige Flächenbereich ist in einer vorteilhaften Ausgestaltung in zumindest zwei Teilbereiche unterteilt, in denen die Reliefstruktur Facetten unterschiedlicher mittlerer Orientierungen aufweist, wodurch der Bildeindruck beim Kippen um die x-Achse plötzlich wechselt und dadurch ein sogenanntes Flip-Bild entsteht. Die Orientierung der Facetten kann auch in zumindest einem Teilbereich des reflektiven teildurchlässigen Flächenbereichs einen sich kontinuierlich ändernden Verlauf aufweisen. Auf diese Weise lässt sich ein Wölbeffekt erzeugen, bei dem der reflektive teildurchlässige Flächenbereich die Wölbung einer dreidimensionalen Vorlage nachstellt. Beim Kippen um die x-Achse führt die Rotation der Beugungsebenen zu einem stereographischen Effekt, wobei der Eindruck einer spiegelnden und gewölbten Oberfläche entsteht. Beim Kippen um die y-Achse ändern sich die Farbe und/oder die Intensität des nachgestellten Spiegelreflexes.

Mit Vorteil enthält die Reliefstruktur Facetten, deren Orientierung so aufeinander abgestimmt ist, dass das Sicherheitselement beim Kippen um die x-Achse einen Bewegungseffekt, insbesondere einen orthoparallaktischen Bewegungseffekt oder einen stereographischen Effekt zeigt.

Erfindungsgemäß ist vorgesehen, dass

- die Reliefstruktur eine Vielzahl von reflektiven Pixeln enthält, die jeweils eine oder mehrere, gleich orientierte reflektive Facetten aufweisen, wobei eine Neigung jeder Facette gegen die x-y-Ebene durch die Angabe ihres normalisierten Normalenvektors bestimmt ist,
- die Reliefstruktur eine durch die x-Achse angegebene Vorzugsrichtung aufweist, so dass mehr als 80%, insbesondere mehr als 90% der Facetten der Reliefstruktur einen in der y-z-Ebene liegenden Normalenvektor aufweisen, und
- das Perforationsmuster eine Vorzugsrichtung aufweist, die parallel zur x-Achse liegt.

Insbesondere bildet das Perforationsmuster dabei ein Drahtgitter dessen Vorzugsrichtung durch den Gittervektor des Drahtgitters gegeben ist.

Wie weiter unten im Detail erläutert, stellt das Sicherheitselement durch die Abstimmung der Orientierung der Facetten der Reliefstruktur und der Vorzugsrichtung des Perforationsmusters (insbesondere dem Gittervektor des Drahtgitters) in dieser Ausgestaltung zwei unterschiedliche Kippeffekte bereit, die bei einer Verkippung des Sicherheitselements um zueinander orthogonale Kippachsen auftreten und die mit Vorteil vollständig voneinander entkoppelt sind. Insbesondere tritt beim Kippen des Sicherheitselements um die x-Achse als erster Kippeffekt ein kinematischer Effekt in Erscheinung, der in vorteilhaften Gestaltungen nicht von einer Farbänderung, also einem chromatischen Kippeffekt begleitet ist, und beim Kippen des Sicherheitselements um die y-Achse tritt der zweite Kippeffekt in Erscheinung, nämlich ein chromatischer Effekt, der in einer reinen Farbänderung ohne Bewegungseffekt besteht.

Die reflektiven Pixel enthalten bei der genannten Ausgestaltung vorzugsweise jeweils zwei oder mehr gleich orientierte Facetten, es ist jedoch auch möglich, dass ein Teil der Pixel oder alle Pixel jeweils nur eine Facette enthalten. Zumindest ein Teil der Pixel und/oder der Facetten ist vorteilhaft mit einem Umriss in Form eines Motivs, insbesondere in Form von Zeichen oder Symbolen ausgebildet. Die besonderen Umrisse können als zusätzliches Echtheitsmerkmal verwendet werden, das nur unter Vergrößerung sichtbar wird. Weiter kann in einen Teil der Pixel oder Facetten zusätzlich ein Mikrotext eingeschrieben sein. Der Mikrotext kann dabei sowohl auf die Facetten geschrieben sein oder auch anstelle einiger der Facetten auf dem Träger vorliegen.

Die Facetten sind bei der genannten Ausgestaltung bevorzugt im Wesentlichen als ebene Flächenelemente ausgebildet. Die Formulierung "im Wesentlichen" trägt dabei der Tatsache Rechnung, dass sich in der Praxis herstellungsbedingt keine perfekt ebenen Flächenelemente erzeugen lassen. Alternativ können die Facetten auch als gekrümmte, insbesondere konkave, konvexe oder gewellte Flächenelemente ausgebildet sein. Der Normalenvektor ändert sich dann über der Flächenausdehnung der Flächenelemente, liegt jedoch stets in der y-z-Ebene.

Das Sicherheitselement weist nach einer Weiterbildung der Erfindung zusätzlich eine unterhalb des reflektiven teildurchlässigen Flächenbereichs angeordnete Information, insbesondere ein Muster, Zeichen oder eine Codierung, auf, die bei Betrachtung durch den teildurchlässigen Flächenbereich hindurch erkennbar ist.

Der Flächenbereich kann insbesondere auch mit anderen Sicherheitsmerkmalen kombiniert werden, beispielsweise mit Hologrammen, insbesondere Echtfarbenhologrammen, mit Subwellenlängengittern oder anderen Subwellenlängenstrukturen, mit Mikrospiegelanordnungen ohne Perforationsmuster oder diffraktive Gitter, oder auch mit Sicherheitsmerkmalen, die auf speziellen Materialeigenschaften, wie elektrischer Leitfähigkeit, magnetischen Eigenschaften, Lumineszenz, Fluoreszenz oder dergleichen basieren. Diese anderen Sicherheitsmerkmale können beispielsweise in Lücken des Flächenbereichs vorgesehen und mit diesem verschachtelt sein oder sie können unterhalb des Flächenbereichs vorgesehen sein, wo sie aufgrund der Teildurchlässigkeit des Flächenbereichs erkennbar sind.

Die Erfindung enthält auch einen Datenträger mit einem Sicherheitselement der beschriebenen Art, wobei das Sicherheitselement sowohl in einem opaken Bereich des Datenträgers als auch in oder über einem transparenten Fensterbereich oder einer durchgehenden Öffnung des Datenträgers angeordnet sein kann. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Die Erfindung enthält weiter ein Verfahren zum Herstellen eines optisch variablen Sicherheitselements der beschriebenen Art, bei dem

- ein Träger bereitgestellt und mit einem reflektiven Flächenbereich versehen wird, dessen Ausdehnung eine x-y-Ebene und eine darauf senkrecht stehende z-Achse definiert,

- der reflektive Flächenbereich teildurchlässig und mit einer Beugungsstruktur ausgebildet wird, die durch eine additive Überlagerung einer makroskopisch oder mikroskopisch feinen Reliefstruktur und einem mikroskopisch feinen Perforationsmuster gebildet ist, wobei die Beugungsstruktur durch eine Strukturfunktion S(x,y), die Reliefstruktur durch eine Relieffunktion R(x,y), das Perforationsmuster durch eine Musterfunktion P(x,y), und die additive Überlagerung durch

$$S(x,y) = R(x,y) + P(x,y)$$

beschrieben ist,

- das Perforationsmuster durch eine reflektierende Schicht mit einer Vielzahl mikroskopisch feiner Perforationen gebildet wird, die aufgrund der additiven Überlagerung dem Verlauf der Reliefstruktur folgt und eine lichtbeugende oder lichtstreuende optisch wirksame und teildurchlässige Beschichtung der Reliefstruktur darstellt, und

- eine die Reliefstruktur beschreibende Relieffunktion R(x,y) gewählt wird, die wenigstens stückweise stetig ist, keine periodische Dreiecks- oder Rechtecksfunktion darstellt und sich im Vergleich zur Musterfunktion P(x,y) nur langsam ändert.

Zur Herstellung der Reliefstruktur kann diese gemäß der gewählten Relieffunktion R(x,y) in ein transparentes oder transluzentes Material, beispielsweise einen UV-Lack oder ein thermoplastisch verformbares Material abgeformt werden.

Das Perforationsmuster wird in einer vorteilhaften Verfahrensvariante dadurch gebildet, dass zunächst eine vollflächige reflektierende Schicht auf die Reliefstruktur aufgebracht wird, und die vollflächige reflektierende Schicht dann durch Laserbeaufschlagung mit Perforationen versehen wird um das gewünschte Perforationsmuster gemäß der gewählten Musterfunktion P(x,y) zu erzeugen.

Bei der Laserdemetallisierung liegt die Wellenlänge der verwendeten Laserstrahlung vorteilhaft zwischen 1000 nm und 1100 nm, oder ist eine Vervielfachte einer solchen Wellenlänge. Beispielsweise kann für die Laserdemetallisierung ein Nd:YAG-Laser bei 1064 nm, frequenzverdoppelt bei 532 nm, oder frequenzverdreifacht bei 355 nm zum Einsatz kommen. Die Laserbeaufschlagung erfolgt vorzugsweise mit gepulster Laserstrahlung, vor allem mit Pulslängen von weniger als 100 ns, insbesondere weniger als 60 ns. Die Perforationen werden bevorzugt durch direktes Laserschreiben mit Hilfe eines Scanners, durch strukturabhängige Demetallisation, durch Fokussierung mit Hilfe von Mikrolinsenarrays oder durch diffraktive optische Elemente, Masken, räumliche Lichtmodulatoren (Spatial Light Modulators, SLM), oder einem Gitter im Strahlengang erzeugt. Besonders bevorzugt ist gegenwärtig die Erzeugung der Perforationen mittels Zwei- oder Mehrstrahlinterferenz.

Alternative erfindungsgemäße Verfahren zur Erzeugung der Perforationen schließen den Einsatz von Waschfarben, von selektiven Ätztechniken, wie etwa strukturabhängigem Ätzen, oder von belichteten Photolacken in selektiven Ablösetechniken bzw. Lift-Off-Prozessen ein. Weiter ist es auch möglich, das Perforationsmuster mit der reflektierenden Schicht und der Vielzahl mikroskopisch feiner Perforationen zunächst separat herzustellen und dann in einem Transferprozess auf die Reliefstruktur zu übertragen. Nach einem weiteren alternativen Verfahren können die Perforationen auch durch selektiven Transfer einer reflektierenden Schicht von korrespondierend zum späteren Perforationsmuster in ein transparentes oder transluzentes Material abgeformten Erhebungen auf eine mit einer Klebstoffschicht versehene Folie erzeugt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1    eine schematische Darstellung einer Banknote mit einem erfindungsgemäßen optisch variablen Sicherheitselement in Form eines breiten Sicherheitsstreifens,

Fig. 2    jeweils für einen Abschnitt des Sicherheitselements der Fig. 1 schematisch das vom Betrachter wahrgenommene Erscheinungsbild bei unterschiedlichen Kippstellungen des Sicherheitselements,

Fig. 3    in (a) bis (c) eine allgemeine Erläuterung der Beziehung der in dem reflektiven teildurchlässigen Flächenbereich eines erfindungsgemäßen Sicherheitselements vorliegenden Strukturen, wobei (a) den Höhenverlauf einer Strukturfunktion S(x,y), (b) den Höhenverlauf der zugehörigen Relieffunktion R(x,y) und (c) den Höhenverlauf der zugehörigen Musterfunktion P(x,y), jeweils in x-Richtung zeigt,

Fig. 4    einen Detailausschnitt der im Flächenbereich der Figuren 1 und 2 vorliegenden Beugungsstruktur in perspektivischer Ansicht,

Fig. 5    in (a) bis (c) drei konkrete Beispiele für Perforationsmuster erfindungsgemäßer Sicherheitselemente in Aufsicht, und

Fig. 6    ein Sicherheitselement, dessen reflektiver teildurchlässiger Flächenbereich in zwei Teilbereiche unterschiedlicher mittlerer Orientierung der Reliefstruktur unterteilt ist.

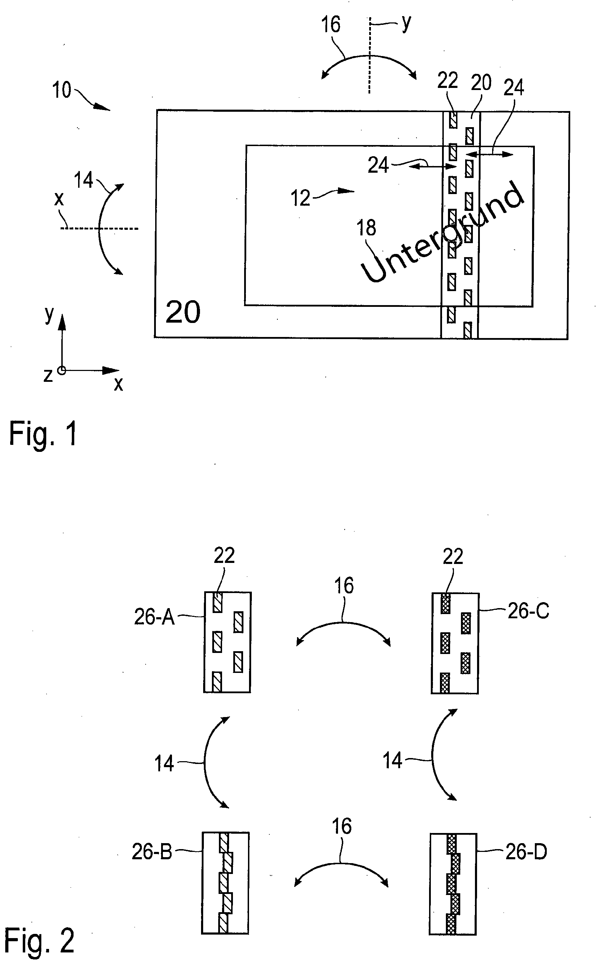

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen und teildurchlässigen Sicherheitselement 12 in Form eines breiten Sicherheitsstreifens. Es versteht sich allerdings, dass die Erfindung nicht auf Sicherheitsstreifen und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Sicherheitsstreifen beispielsweise auch Sicherheitsfäden oder Transferelemente in Betracht, die auch in oder über einem Fensterbereich oder einer durchgehenden Öffnung des Datenträgers angeordnet sein können.

Das in Figur 1 gezeigte Sicherheitselement 12 zeigt zwei unterschiedliche Kippeffekte, die bei einer Verkippung 14,16 des Sicherheitselements um zueinander orthogonale Kippachsen auftreten und die vollständig voneinander entkoppelt sind. Zur Beschreibung dieser orthogonalen, entkoppelten Kippeffekte wird ergänzend auf Fig. 2 Bezug genommen, die zunächst unter Vernachlässigung der Teildurchlässigkeit jeweils für einen Abschnitt des Sicherheitselements 12 schematisch das vom Betrachter wahrgenommene Erscheinungsbild bei unterschiedlichen Kippstellungen des Sicherheitselements 12 zeigt.

Das optisch variable Sicherheitselement 12 enthält einen reflektiven, teildurchlässigen Flächenbereich 20, dessen Ausdehnung eine x-y-Ebene definiert, die hier mit der Oberfläche der Banknote 10 zusammenfällt. Die x- und y-Achse der x-y-Ebene stellen dabei zwei ausgezeichnete Kipprichtungen dar, wobei bei Verkippung um eine der ausgezeichneten Achsen jeweils nur einer der beiden orthogonalen Kippeffekte auftritt. Im Ausführungsbeispiel erstreckt sich die x-Achse entlang der Längskante und die y-Achse entlang der Querkante der Banknote 10. Eine Verkippung 14 der Banknote nach vorne oder hinten stellt daher eine Verkippung um die x-Achse dar und wird nachfolgend der Anschaulichkeit halber auch oft als "Nord-Süd-Verkippung" bezeichnet. Eine Verkippung 16 der Banknote nach rechts oder links stellt eine Verkippung um die y-Achse dar und wird nachfolgend auch oft als "Ost-West-Verkippung" bezeichnet. Die z-Achse steht senkrecht auf der x-y-Ebene, so dass das durch die drei Achsen gebildete Koordinatensystem ein Rechtssystem bildet.

Der Flächenbereich 20 zeigt ein sogenanntes RollingCube-Muster, bei dem in jeder Kippstellung zwei parallele Reihen kleiner Rechtecke 22 zu sehen sind, die, wie in Fig. 1 illustriert, einen bestimmten Abstand voneinander aufweisen und mit einem bestimmten Farbeindruck, beispielsweise mit rotem Farbeindruck, erscheinen.

Beim Kippen der Banknote um die x-Achse, also einer Nord-Süd-Verkippung 14 des Sicherheitselements 12, tritt der erste der beiden angesprochenen Kippeffekte in Erscheinung, nämlich ein kinematischer Effekt, bei dem sich die beiden Rechteck-Reihen 22 ohne Farbänderung entlang der Pfeile 24 der Fig. 1 aufeinander zu bzw. von einander weg bewegen.

Beim Kippen der Banknote um die y-Achse, also einer Ost-West-Verkippung 16 des Sicherheitselements 12, tritt der zweite Kippeffekt in Erscheinung, nämlich ein chromatischer Effekt, bei dem die Rechteck-Reihen 22 ohne Änderung ihres Abstands ihre Farbe verändern, beispielsweise zwischen Rot und Grün.

Die beiden Kippeffekte werden als orthogonal bezeichnet, da sie beim Kippen um zueinander orthogonale Kippachsen 14,16 auftreten. Die beiden Kippeffekte sind zudem vollständig entkoppelt, da beim Kippen 14 um die x-Achse nur der kinematische Effekt aber kein chromatischer Effekt auftritt, während beim Kippen 16 um die y-Achse nur der chromatische Effekt, aber kein kinematischer Effekt auftritt.

Das Sicherheitselement 12 ist teildurchlässig mit einer Transmission ausgebildet, die vorteilhaft zwischen 20 % und 80%, im Ausführungsbeispiel bei etwa 50% liegt,, und erlaubt daher, unter dem Sicherheitselement liegende Informationen, wie etwa einen Untergrunddruck 18 zu erkennen. Das Sicherheitselement kann auch in oder über einem Fensterbereich oder einer durchgehenden Öffnung einer Banknote oder eines anderen Datenträgers angeordnet sein und so einen zugleich einen Durchsichtsbereich schaffen.

Figur 2 illustriert das Erscheinungsbild des Sicherheitselements 12 vor und nach den verschiedenen Verkippungen 14,16. Dabei wird von dem Erscheinungsbild der Fig. 1 ausgegangen, das in Fig. 2 links oben als Erscheinungsbild 26-A gezeigt ist und das die Rechteck-Reihen 22 mit großem Abstand und rotem Farbeindruck zeigt.

Eine Nord-Süd-Verkippung 14 der Banknote 10 führt zu dem in Fig. 2 links unten gezeigten Erscheinungsbild 26-B, bei dem die Rechteck-Reihen 22 sich ohne Farbänderung für den Betrachter aufeinander zu bewegt haben, also nunmehr bei unverändert rotem Farbeindruck einen geringen Abstand aufweisen. Durch Zurückkippen wird das ursprüngliche Erscheinungsbild 26-A wiederhergestellt. Wird dagegen ausgehend von dem Erscheinungsbild 26-A eine Ost-West-Verkippung 16 durchgeführt, so ändern die Rechteck-Reihen 22 ihre Farbe, beispielsweise von Rot nach Grün, während die Position der Rechtecke und damit der Abstand der Rechteck-Reihen 22 unverändert bleibt. Es ergibt sich das in Fig. 2 rechts oben gezeigte Erscheinungsbild 26-C mit großem Abstand der Rechteck-Reihen 22 und grünem Farbeindruck. Wird aus dieser Kippstellung eine Nord-Süd-Verkippung 14 durchgeführt, so bewegen sich die Rechteck-Reihen 22 wieder ohne Farbänderung aufeinander zu, so dass das rechts unten gezeigte Erscheinungsbild 26-D entsteht, bei dem die Rechteck-Reihen bei grünem Farbeindruck einen geringen Abstand aufweisen. Eine weitere Ost-West-Verkippung 16 führt zurück zum Erscheinungsbild 26-B mit geringem Abstand und rotem Farbeindruck.

Es versteht sich, dass die Abstandsänderungen und die Farbänderungen der Rechteck-Reihen 22 in der Realität kontinuierlich sind und in Fig. 2 nur zur Illustration auf zwei Abstandswerte und zwei Farbeindrücke beschränkt wurden.

Weiter ergibt sich aus der beschriebenen Funktionsweise auch, dass eine Verkippung um eine Achse, die nicht mit der x- oder y-Achse zusammenfällt, einen kombinierten Kippeffekt bewirkt, der sowohl einen kinematischen als auch einen chromatischen Anteil aufweist. Die Orientierung der x- und y-Achse in der Ebene des Flächenbereichs 20 ist gerade durch die ausgezeichneten Kippachsen für die Verkippungen 14,16 definiert, bei denen ein rein kinematischer Effekt (Verkippung 14) bzw. ein rein chromatischer Effekt (Verkippung 16) auftreten. Im Ausführungsbeispiel liegen diese ausgezeichneten Kippachsen parallel zu den Kanten des Sicherheitselements 12 und der Banknote 10, im Allgemeinen können die ausgezeichneten Kippachsen jedoch eine beliebige Orientierung relativ zu den Kanten des Sicherheitselements aufweisen.

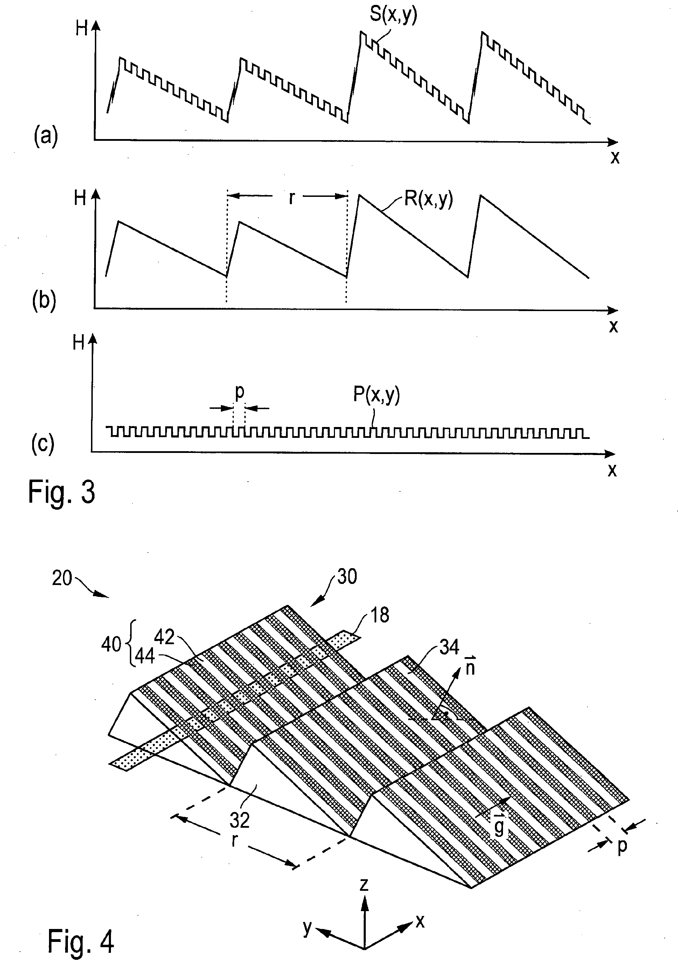

Der Aufbau erfindungsgemäßer Sicherheitselemente und das Zustandekommen der Teildurchlässigkeit sowie der beiden orthogonalen, entkoppelten Kippeffekte wird nun mit Bezug auf die Figuren 3 und 4 näher erläutert. Dabei illustriert Fig. 3 allgemein die Beziehung der in dem reflektiven teildurchlässigen Flächenbereich 20 eines erfindungsgemäßen Sicherheitselements 12 vorliegenden Strukturen, und Fig. 4 zeigt konkret einen Detailausschnitt der im Flächenbereich 20 der Figuren 1 und 2 vorliegenden Beugungsstruktur 30 in perspektivischer Ansicht.

Die im Flächenbereich 20 vorliegende Beugungsstruktur 30 ist allgemein durch eine in Fig. 3(a) dargestellte Strukturfunktion S(x,y) gegeben, die den Höhenverlauf der Beugungsstruktur 30 in der x-y-Ebene beschreibt. Figur 3 zeigt der einfacheren Darstellung halber den Verlauf der Strukturfunktion S(x,y) und der anderen beteiligten Funktionen jeweils in nur einer Raumrichtung.

Die Beugungsstruktur 30 enthält eine langsam variierende Grundkomponente in Form einer makroskopisch oder mikroskopisch feinen Reliefstruktur 32, die additiv von einer schnell variierenden Zusatzkomponente in Form eines mikroskopisch feinen Perforationsmusters 40 überlagert ist. Der Höhenverlauf der Reliefstruktur 32 ist dabei durch eine in Fig. 3(b) gezeigte Relieffunktion R(x,y) und der Höhenverlauf des Perforationsmusters 40 durch eine in Fig. 3(c) gezeigte Musterfunktion P(x,y) beschrieben. Die Relieffunktion R(x,y) und die Musterfunktion P(x,y) sind additiv überlagert, um die Strukturfunktion S(x,y) zu bilden, so dass

$$S(x,y) = R(x,y) + P(x,y)$$

gilt.

Die Relieffunktion R(x,y) ist dabei wenigstens stückweise stetig und stellt keine periodische Dreiecks- oder Rechtecksfunktion dar.

Das Perforationsmuster 40 ist durch eine reflektierende Schicht, beispielsweise eine Metallschicht gebildet, die mit einer Vielzahl mikroskopisch feiner Perforationen 42 versehen ist. Aufgrund der additiven Überlagerung folgt die perforierte Schicht des Perforationsmusters 40 in der Beugungsstruktur 30 dem Verlauf der Reliefstruktur 32 und stellt eine lichtbeugende oder lichtstreuende optisch wirksame und teildurchlässige Beschichtung der Reliefstruktur 32 dar. Die Schichtdicke der reflektierenden Schicht ist wesentlich kleiner als die Strukturhöhe der Reliefstruktur. Letztere beträgt in der Regel mehrere Mikrometer oder einige zehn Mikrometer, während erstere typischerweise nur einige zehn oder wenige hundert Nanometer beträgt. Das Perforationsmuster 40 stellt daher nur eine dünne Beschichtung der Reliefstruktur dar und folgt deren Verlauf.

Wesentlich ist in jedem Fall, dass sich die Relieffunktion R(x,y) im Vergleich zur Musterfunktion P(x,y) nur langsam ändert. Beispielsweise ist die Relieffunktion R(x,y), wie in den Figuren 3 und 4 gezeigt, eine Rasterfunktion mit einer Rasterweite r und die Musterfunktion P(x,y) ist eine periodische Funktion mit einer Periodizitätslänge p, wobei r » p, beispielsweise r = 10*p (Fig. 3) oder r = 15*p (Fig. 4) gilt.

Bei Vergleich der Figuren 3 und 4 ist zu beachten, dass sich die Musterfunktion P(x,y) bzw. das Perforationsmuster 40 in beiden Figuren periodisch in x-Richtung erstreckt, dass aber Rasterung der Relieffunktion R(x,y) bzw. die Reliefstruktur 32 in der illustrierenden Darstellung der Fig. 3 periodisch in x-Richtung und in dem Ausführungsbeispiel der Fig. 4 periodisch in y-Richtung ausgebildet ist.

Zurückkommend auf die Erläuterung der orthogonalen, entkoppelten Kippeffekte ist die Reliefstruktur 32 der Beugungsstruktur 30 in x-Richtung sägezahnförmig mit einer Rasterweite r ausgebildet, die vorteilhaft zwischen 20 μm und 100 μm liegt und im Ausführungsbeispiel r = 30 μm beträgt. Die flachen Teilflächen der Sägezähne bilden Facetten 34, deren Orientierung, also insbesondere die Neigung der Facetten gegen die x-y-Ebene, durch die Angabe ihres normalisierten Normalenvektor $n_0 = (n_x, n_y, n_z)$ mit $|n_0| = 1$ und positiver z-Komponente bestimmt ist.

Die Länge der Sägezähne bzw. der Facetten 34 ist dann konstant und beträgt jeweils r = 30 μm, die Breite der Sägezähne (Abmessung in y-Richtung) kann beispielsweise einen Wert zwischen 7,5 und 15 μm aufweisen. Wie in Fig. 3 gezeigt, variiert die Höhe der Sägezähne, so dass sich die Orientierung der Facetten 34 trotz konstanter Rasterweite r von Ort zu Ort unterscheidet und so für einen Betrachter in verschiedenen Betrachtungsrichtungen ein oder mehrere gewünschte, aus Pixeln aufgebaute Motive erzeugen kann.

Die Facetten 34 des Flächenbereichs 20 weisen im Ausführungsbeispiel auch bei unterschiedlicher Neigung alle einen in der y-z-Ebene liegenden Normalenvektor auf, d.h. die x-Komponente $n_x$ des Normalenvektors ist Null. Wegen der Normierung ist der Normalenvektor einer Facette dann bereits durch die y-Komponente $n_y$ eindeutig bestimmt und hängt über die Beziehung

$$n_y = \sin \gamma$$

mit dem Neigungswinkel γ zusammen, den die Facette 34 mit der x-y-Ebene und damit der makroskopischen Oberfläche des Flächenmusters 20 einschließt (Fig. 4).

Die Reliefstruktur 32 mit ihren Facetten 34 ist mit einem Perforationsmuster 40 überlagert, das aus einer Metallschicht besteht, in die eine Vielzahl paralleler longitudinaler Perforationen 42 eingebracht ist. Die Perforationen 42 sind im Ausführungsbeispiel äquidistant mit einer Periodenlänge $p$ angeordnet, die zwischen 0,2 $\mu$m und 4 $\mu$m, insbesondere zwischen 1 $\mu$m und 3 $\mu$m, und im konkreten Ausführungsbeispiel der Fig. 4 bei $p$ = 2 $\mu$m liegt. Die Breite der Perforationen 42 beträgt im Ausführungsbeispiel $b_p$= 1 $\mu$m, so dass sich stehengelassene Metalllinien 44 mit einer Breite von $b_m$ = 1 $\mu$m ergeben.

Die Metalllinien 44 des Perforationsmusters 40 bilden ein Gittermuster auf den Facetten 34, dessen Gittervektor g parallel zur x-Achse liegt. Wie üblich liegt der Gittervektor eines Gittermusters in der Ebene des Gittermusters und steht auf den Gitterlinien, hier also den Metalllinien 44 senkrecht. Der Betrag des Gittervektors gibt die Periodenlänge des Gittermusters an. Vorliegend kann der Gittervektor daher allgemein als $g$ = $(p, 0, 0)$ mit der Periodenlänge $p$ geschrieben werden.

Durch die Abfolge von Metalllinien 44 und Perforationen 42 wirkt das Perforationsmuster 40 einerseits reflektierend und diffraktiv, andererseits aber auch transmittierend sowie als Polarisationsfilter und erlaubt den Blick auf eine unter der Beugungsstruktur 30 angeordnete Information 18. Wegen der geringen Breite der Perforationen 42 von $b_p$= 1 $\mu$m und der hohen Leitfähigkeit der Metalllinien 44 wird dabei im Wesentlichen nur polarisiertes Licht durchgelassen bzw. wird Licht beim Durchtritt durch das Perforationsmuster 40 polarisiert. Durch die Wahl des Verhältnisses der Breite der Perforationen 42 zu der Breite der Metalllinien 44 kann die Transmission und entsprechend der diffraktive Wirkungsgrad des Gitters bei gegebener Periodenlänge $p$ in weitem Bereich nach Wunsch eingestellt werden.

Werden zur Erklärung des kinematischen Effekts nun zunächst die Facetten 34 ohne den diffraktiven Effekt des Gitters 42, 44 betrachtet, so wirken die Facetten 34 als achromatisch reflektierende Mikrospiegel, die einfallendes Licht ohne Farbaufspaltung nach den Gesetzen der geometrischen Optik reflektieren. Ist aus einer Betrachtungsrichtung für eine Facette die Reflexionsbedingung "Einfallswinkel gleich Ausfallswinkel" erfüllt, erscheint die Facette farblos hell, ansonsten dunkel. Da die Reflexionsbedingung nur für einen Kippwinkel exakt erfüllt ist, ergibt sich beim Kippen des Sicherheitselements in Nord-Süd-Richtung eine abrupte, diskrete Helligkeitsänderung.

Das Flächenmuster 20 weist eine Vielzahl von Facetten 34 mit unterschiedlichen Neigungswinkeln $\gamma$ auf, wobei die gleich orientierten Facetten 34 so angeordnet sind, dass die Gesamtheit der hell aufleuchtenden bzw. dunklen Facetten dem Betrachter ein gewünschtes Motiv zeigt. Die Normalenvektoren aller Facetten 34 liegen in der y-z-Ebene, so dass sich die Reflexionsbedingung beim Kippen des Sicherheitselements 12 in Nord-Süd-Richtung für alle Facetten 34 gleichzeitig und in gleichem Maß ändert. Facetten, die vor der Verkippung die Reflexionsbedingung erfüllt haben und hell erschienen, können die Reflexionsbedingung nach der Nord-Süd-Verkippung nicht mehr erfüllen und erscheinen daher dunkel. Umgekehrt können Facetten, die vor der Verkippung noch dunkel waren, bei passender Neigung nach der Nord-Süd-Verkippung hell erscheinen. Durch geeignete Anordnung der Facetten und ihrer Neigungswinkel können so alle gewünschten Bewegungseffekte, insbesondere auch orthoparallaktische Bewegungseffekte erzeugt werden. Auch stereographische Effekte sind möglich. Die Gesamtheit der möglichen Bewegungseffekte und stereographischen Effekte wird im Rahmen dieser Beschreibung unter dem Begriff "kinematische Effekte" zusammengefasst.

Wird zur Erklärung des chromatischen Effekts nun die diffraktive Wirkung der Metalllinien 44 und der Perforationen 42 des Perforationsmusters 40 hinzugenommen, also zusätzlich die Beugung des einfallenden Lichts an den feinen Metalllinien 44 berücksichtigt, so tritt anstelle der Richtung des geometrisch gerichtet reflektierten Lichtstrahls die Richtung der 0-ten Beugungsordnung des Gittermusters 42, 44. In der Richtung der 0-ten Beugungsordnung ist die Reflexionsbedingung "Einfallswinkel gleich Ausfallswinkel" erfüllt, die Facette erscheint hell und farblos, wenngleich typischerweise mit etwas geringerer Helligkeit als im oben beschriebenen gitterfreien Fall, da ein Teil des Lichts in andere Raumrichtungen gebeugt wird.

Bei dem Gittermuster 42, 44 liegt die Ausbreitungsrichtung des gebeugten Lichts in einer Ebene, die durch den Gittervektor g und die Richtung der 0-ten Beugungsordnung aufgespannt wird. Innerhalb dieser Ebene wird die Richtung des gebeugten Lichts durch die Gittergleichung

$$\sin\alpha + \sin\beta = m\,\lambda/p$$

angegeben, in der $m$ die Beugungsordnung, $p$ die Gitterperiode und $\lambda$ die Wellenlänge bedeuten. Die Winkel $\alpha$ bzw. $\beta$ sind die Winkel des einfallenden bzw. reflektierten Lichts, projiziert in die von dem Gittervektor g und dem Normalenvektor n aufgespannte Ebene. Der Winkel $\alpha$ wird dabei stets positiv genommen, der Winkel $\beta$ positiv, wenn er, wie bei den erfindungsgemäßen Gestaltungen üblich, bezüglich der Gitternormalen auf derselben Seite wie $\alpha$ liegt, ansonsten negativ.

Für eine bestimmte Betrachtungsrichtung und Kippstellung des Sicherheitselements 12, wie beispielsweise in Fig. 1 dargestellt, ergibt sich dann ein bestimmtes Erscheinungsbild des Flächenbereichs, das einerseits durch den Neigungswinkel der Facetten 34 und andererseits durch die Beugungswirkung des Gittermusters 42, 44 bestimmt ist.

Bei einer Nord-Süd-Verkippung 14 des Sicherheitselements 12, also einer Verkippung um die x-Achse, ändert sich die Reflexionsbedingung für alle Facetten 34 gleichzeitig, so dass durch die Anordnung der Facetten 34 der gewünschte kinematische Effekt entsteht. Aufgrund der besonderen Ausrichtung der Metalllinien 44 parallel zur y-z-Ebene bzw. einem Gittervektor g parallel zur x-Achse, ändern sich die Winkel $\alpha$ und $\beta$ der Gittergleichung bei einer Nord-Süd-Verkippung 14 nicht. Der Farbeindruck der Facetten 34 bleibt bei einer Nord-Süd-Verkippung 14 daher unverändert, und der kinematische Effekt ist nicht von einem chromatischen Effekt begleitet.

Umgekehrt verändert eine Ost-West-Verkippung 16, also eine Verkippung des Sicherheitselements um die y-Achse, wegen der besonderen Orientierung der Facetten 34 nicht die Ausbreitungsebene des gebeugten Lichts, die durch den Gittervektor g und die Richtung der 0-ten Beugungsordnung aufgespannt wird, so dass bei einer Ost-West-Verkippung keine abrupte und diskrete Änderung der Sichtbarkeit einzelner Facetten eintritt, vielmehr das räumliche Erscheinungsbild, wie etwa der Abstand der Rechteck-Reihen 22 der Figuren 1 und 2, erhalten bleibt.

Die Ost-West-Verkippung 16 verläuft in der Beugungsebene des Gittermusters, so dass sich mit der Verkippung auch die Winkel $\alpha$ und $\beta$ in der Gittergleichung graduell ändern. Bei einer Ost-West-Verkippung tritt daher eine graduelle Farb- und/oder Intensitätsänderung auf, durch die sich insbesondere der Farbeindruck der Facetten 34 kontinuierlich verändert. Da das räumliche Erscheinungsbild jedoch erhalten bleibt, ist der chromatische Effekt nicht von einem kinematischen Effekt begleitet. Insgesamt sind die beiden orthogonalen Effekte somit vollständig entkoppelt.

Zur Herstellung der Beugungsstruktur 30 wird beispielsweise zunächst die sägezahnförmige Reliefstruktur 32 mit den gewünschten Neigungswinkeln der Facetten 34 mit mikroskopisch glatten Flanken in ein transparentes oder transluzentes Material, beispielsweise einen UV-Lack oder ein thermoplastisch verformbares Material, abgeformt. Der Höhenverlauf der Reliefstruktur ist dabei entsprechend dem darzustellenden Motiv durch die Relieffunktion R(x,y) gegeben. Die Reliefstruktur 32 wird metallisiert, beispielsweise mit Aluminium, Nickel, Kobalt, Gold, Silber oder Kupfer, um eine vollflächige opake Metallschicht zu erhalten. Anschließend wird die vollflächige Metallschicht durch Laserbeaufschlagung bereichsweise demetallisiert, um die Perforationen 42 in der Metallschicht und damit das Perforationsmuster 40 zu bilden. Der Höhenverlauf des Perforationsmusters 40 selbst ist dabei durch die Musterfunktion P(x,y) gegeben, während der Höhenverlauf der beschichteten Reliefstruktur durch die Strukturfunktion S(x,y) = R(x,y) + P(x,y) gegeben ist.

Die Laserdemetallisation kann beispielsweise mit Hilfe eines gepulsten Nd:YAG-Lasers bei 1064 nm und einer Pulslänge von weniger als 60 ns durch Zweistrahl-Laserinterferenz erfolgen.

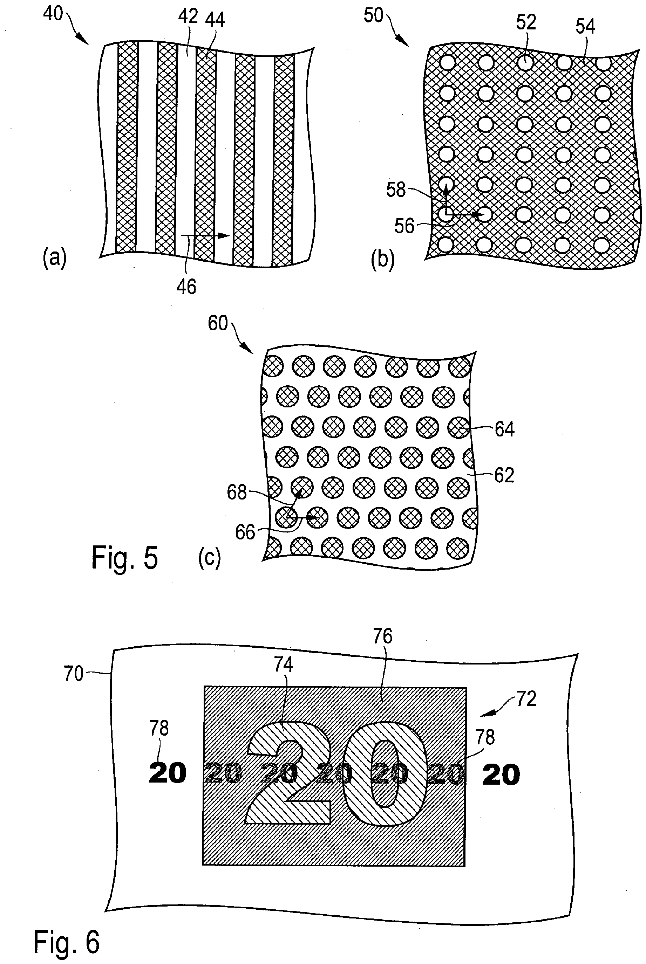

Figur 5 zeigt einige konkrete Beispiele für Perforationsmuster erfindungsgemäßer Sicherheitselemente in Aufsicht. Das Perforationsmuster 40 der Fig. 5(a) entspricht im Wesentlichen dem Perforationsmuster der Fig. 4 und stellt ein Drahtgitter aus einer Abfolge von Metalllinien 44 und longitudinalen Perforationen 42 dar. Das Perforationsmuster 40 weist eine Vorzugsrichtung 46 auf, die durch den Gittervektor g des Drahtgitters gegeben ist.

Figur 5(b) zeigt ein Perforationsmuster 50 in Form eines rechteckigen Lochgitters, bei dem in eine Metallschicht 54 eine Vielzahl kreisförmiger Perforation 52 in einem zweidimensionalen Rechteckgitter eingebracht sind. Das Perforationsmuster 50 weist zwei Vorzugsrichtungen 56, 58 auf, die durch die Gittervektoren des Lochgitters gegeben sind. Die beiden Gittervektoren können gleiche, oder, wie in Fig. 5(b), auch verschiedene Länge haben.

Das Perforationsmuster 60 der Fig. 5(c) ist in Form eines hexagonalen Punktgitters ausgebildet, bei dem eine vollflächige Metallschicht so perforiert wurde, dass eine Vielzahl kreisförmiger Metallinseln 64 in einer zusammenhängenden Perforation 62 entstehen. Die Metallinseln 64 sind an den Gitterpunkten eines hexagonalen Gitters angeordnet, so dass das Perforationsmuster 60 ebenfalls zwei Vorzugsrichtungen 66, 68 aufweist, die durch die Gittervektoren des hexagonalen Punktgitters gegeben sind.

Mit den in den Figuren 5(b) und 5(c) gezeigten Perforationsmustern 50, 60 lassen sich bei entsprechend gewählten Gitterperioden px bzw. py ähnliche Effekte erzeugen, wie sie vorstehend im Zusammenhang mit Fig. 2 beschrieben sind.

Bei dem Ausführungsbeispiel der Fig. 6 enthält der reflektive teildurchlässige Flächenbereich 72 des Sicherheitselements 70 zwei jeweils mit einer Beugungsstruktur 30 der beschriebenen Art versehene Teilbereiche 74, 76. Die Beugungsstrukturen 30 der Teilbereiche 74, 76 unterschieden sich dabei nur in der makroskopisch oder mikroskopisch feinen Reliefstruktur 32, nicht jedoch in dem Perforationsmuster 40.

Beispielsweise können die Reliefstrukturen 32 jeweils sägezahnförmig ausgebildet sein (siehe Fig. 3(b)), wobei allerdings die Facetten 34 in den Teilbereichen 74 und 76 eine unterschiedliche mittlere Orientierung aufweisen. Beispielsweise können die Facetten 34 in dem Teilbereich 74, der in Form der Wertzahl "20" ausgebildet ist, einen Neigungswinkel $\gamma$ aufweisen, der zufällig zwischen 10° und 20° gewählt ist, während die Facetten 34 in dem Hintergrundbereich 76 einen Neigungswinkel $\gamma$ aufweisen, der zufällig zwischen -10° und -20° gewählt ist. Beim Kippen des Sicherheitselements in Nord-Süd-Richtung erscheint dann je nach Kippstellung der erste oder zweite Teilbereich 74, 76 hell und farbig, so dass die Darstellung der Wertzahl "20" zwischen einer Positivdarstellung (Wertzahl hell, Hintergrund dunkel) und einer Negativdarstellung (Wertzahl dunkel, Hintergrund hell) wechselt und ein sogenanntes Flip-Bild entsteht.

Beim Kippen in Ost-West-Richtung bleibt die Positiv- oder Negativdarstellung als solche grundsätzlich erhalten. Da die Perforationsmuster 40 in den Teilbereichen 74, 76 gleich sind, zeigen die Teilbereiche dieselbe Farbänderung des oben beschriebenen chromatischen Effekts.

Zusätzlich bilden die Perforationsmuster 40 jeweils eine teildurchlässige Beschichtung der Reliefstrukturen 32, so dass eine Untergrundschicht 78, im Ausführungsbeispiel eine Abfolge kleiner Wertzahlen "20", auch im Flächenbereich 72 mit reduzierter Helligkeit sichtbar bleibt.

Bezugszeichenliste

| | |
|---|---|
| 10 | Banknote |
| 12 | Sicherheitselement |
| 14,16 | Kippachsen |
| 18 | Untergrunddruck |
| 20 | reflektiver teildurchlässiger Flächenbereich |
| 22 | kleine Rechtecke |
| 24 | Pfeile der Bewegungsrichtung |
| 26-A bis 26-D | Erscheinungsbilder |
| 30 | Beugungsstruktur |
| 32 | Reliefstruktur |
| 34 | Facetten |
| 40 | Perforationsmuster |
| 42 | Perforationen |
| 44 | Metalllinien |
| 46 | Vorzugsrichtung |
| 50 | Perforationsmuster |
| 52 | Perforationen |
| 54 | Metallschicht |
| 56,58 | Vorzugsrichtungen |
| 60 | Perforationsmuster |
| 62 | Perforation |
| 64 | Metallinseln |
| 66, 68 | Vorzugsrichtungen |
| 70 | Sicherheitselement |
| 72 | reflektiver teildurchlässiger Flächenbereich |
| 74,76 | Teilbereiche |
| 78 | Untergrundschicht |

**Patentansprüche**

1. Optisch variables Sicherheitselement (12) zur Absicherung von Wertgegenständen, mit einem Träger mit einem reflektiven Flächenbereich (20), dessen Ausdehnung eine x-y-Ebene und eine darauf senkrecht stehende z-Achse definiert, **dadurch gekennzeichnet, dass**

   - der reflektive Flächenbereich (20) teildurchlässig ist und eine Beugungsstruktur aufweist, die durch eine additive Überlagerung einer makroskopisch oder mikroskopisch feinen Reliefstruktur (32) und einem mikroskopisch feinen Perforationsmuster (40) gebildet ist, wobei die Beugungsstruktur (30) durch eine Strukturfunktion S(x,y), die Reliefstruktur (32) durch eine Relieffunktion R(x,y), das Perforationsmuster (40) durch eine Musterfunktion P(x,y), und die additive Überlagerung durch

$$S(x,y) = R(x,y) + P(x,y)$$

   beschrieben ist,
   - das Perforationsmuster (40) durch eine reflektierende Schicht mit einer Vielzahl mikroskopisch feiner Perforationen (42) gebildet ist, die aufgrund der additiven Überlagerung dem Verlauf der Reliefstruktur (32) folgt und eine lichtbeugende oder lichtstreuende optisch wirksame und teildurchlässige Beschichtung der Reliefstruktur (32) darstellt, wobei das Perforationsmuster ein ein- oder zweidimensionales Gitter ist, und
   - die die Reliefstruktur (32) beschreibende Relieffunktion R(x,y) wenigstens stückweise stetig ist, keine periodische Dreiecks- oder Rechtecksfunktion darstellt und sich im Vergleich zur Musterfunktion P(x,y) nur langsam ändert, und dass

- die Reliefstruktur eine Vielzahl von reflektiven Pixeln enthält, die jeweils eine oder mehrere, gleich orientierte reflektive Facetten aufweisen, wobei eine Neigung jeder Facette gegen die x-y-Ebene durch die Angabe ihres normalisierten Normalenvektors bestimmt ist,
- die Reliefstruktur eine durch die x-Achse angegebene Vorzugsrichtung aufweist, so dass mehr als 80% der Facetten der Reliefstruktur einen in der y-z-Ebene liegenden Normalenvektor aufweisen, und
- das Perforationsmuster eine Vorzugsrichtung aufweist, die parallel zur x-Achse liegt, wobei die Vorzugsrichtung durch den oder einen Gittervektor des Gitters gegeben ist.

2. Sicherheitselement nach Anspruch 1, **dadurch gekennzeichnet, dass** die Relieffunktion R(x,y) eine symmetrische oder asymmetrische Rasterfunktion mit einer Rasterperiode in zumindest einer Raumrichtung zwischen 1 $\mu$m und 200 $\mu$m, vorzugsweise zwischen 5 $\mu$m und 200 $\mu$m ist.

3. Sicherheitselement nach Anspruch 1, **dadurch gekennzeichnet, dass** die Relieffunktion R(x,y) eine aperiodische Funktion ist, bei der in zumindest einer Raumrichtung benachbarte Extremwerte um wenigstens 1 $\mu$m und höchstens 200 $\mu$m voneinander entfernt sind.

4. Sicherheitselement nach wenigstens einem der Ansprüche 1 bis 3, **dadurch gekennzeichnet, dass** die Reliefstruktur eine Strukturhöhe von 40 $\mu$m oder weniger aufweist.

5. Sicherheitselement nach wenigstens einem der Ansprüche 1 bis 4, **dadurch gekennzeichnet, dass** das ein- oder zweidimensionales Gitter in zumindest einer Raumrichtung eine Gitterperiode zwischen 0,1 $\mu$m und 10 $\mu$m aufweist.

6. Sicherheitselement nach wenigstens einem der Ansprüche 1 bis 5, **dadurch gekennzeichnet, dass** das Perforationsmuster ein Drahtgitter, ein quadratisches oder hexagonales Lochgitter oder ein quadratisches oder hexagonales Punktgitter bildet.

7. Sicherheitselement nach wenigstens einem der Ansprüche 1 bis 6, **dadurch gekennzeichnet, dass** die reflektierende Schicht des Perforationsmusters eine Schicht aus Metall, einer Metalllegierung oder einem hochbrechenden Material ist, insbesondere eine Schicht aus Al, Ni, Co, Au, Ag, Cu, ZnS, TiO$_2$, ZnO oder SiO$_2$.

8. Sicherheitselement nach wenigstens einem der Ansprüche 1 bis 7, **dadurch gekennzeichnet, dass** der Flächenbereich zumindest zwei Teilbereiche mit jeweils einer Beugungsstruktur der genannten Art enthält, wobei

   - die Reliefstrukturen der Beugungsstrukturen in den Teilbereichen paarweise verschieden sind,
   - die Perforationsmuster der Beugungsstrukturen jeweils eine Vorzugsrichtung aufweisen und
   - die jeweiligen Vorzugsrichtungen der Perforationsmuster aller Teilbereiche zueinander parallel sind.

9. Sicherheitselement nach wenigstens einem der Ansprüche 1 bis 8, **dadurch gekennzeichnet, dass** der Flächenbereich einen ersten Teilbereich mit einer ersten Beugungsstruktur und einen zweiten Teilbereich mit einer zweiten Beugungsstruktur enthält, wobei die zweite Beugungsstruktur spiegelbildlich zur ersten Beugungsstruktur ausgebildet ist.

10. Sicherheitselement nach wenigstens einem der Ansprüche 1 bis 9, **dadurch gekennzeichnet, dass** das Sicherheitselement weiter eine unterhalb des reflektiven teildurchlässigen Flächenbereichs angeordnete Information, insbesondere ein Muster, Zeichen oder eine Codierung, aufweist, die bei Betrachtung durch den teildurchlässigen Flächenbereich hindurch erkennbar ist.

11. Datenträger mit einem Sicherheitselement nach wenigstens einem der Ansprüche 1 bis 10.

12. Datenträger nach Anspruch 11, **dadurch gekennzeichnet, dass** das Sicherheitselement in oder über einem Fensterbereich oder einer durchgehenden Öffnung des Datenträgers angeordnet ist.

13. Verfahren zum Herstellen eines optisch variablen Sicherheitselements (12) nach einem der Ansprüche 1 bis 10, bei dem

   - ein Träger bereitgestellt und mit einem reflektiven Flächenbereich (20) versehen wird, dessen Ausdehnung eine x-y-Ebene und eine darauf senkrecht stehende z-Achse definiert,
   - der reflektive Flächenbereich (20) teildurchlässig und mit einer Beugungsstruktur ausgebildet wird, die durch eine additive Überlagerung einer makroskopisch oder mikroskopisch feinen Reliefstruktur (32) und einem mikroskopisch feinen Perforationsmuster (40) gebildet ist, wobei die Beugungsstruktur durch eine Strukturfunktion S(x,y), die Reliefstruktur (32) durch eine Relieffunktion R(x,y), das Perforationsmuster (40) durch eine Musterfunktion P(x,y), und die additive Überlagerung durch

$$S(x,y) = R(x,y) + P(x,y)$$

beschrieben ist,

- das Perforationsmuster (40) durch eine reflektierende Schicht mit einer Vielzahl mikroskopisch feiner Perforationen (42) gebildet wird, die aufgrund der additiven Überlagerung dem Verlauf der Reliefstruktur (32) folgt und eine lichtbeugende oder lichtstreuende optisch wirksame und teildurchlässige Beschichtung der Reliefstruktur (32) darstellt, wobei das Perforationsmuster in Form eines ein- oder zweidimensionalen Gitter gebildet wird, und
- eine die Reliefstruktur (32) beschreibende Relieffunktion R(x,y) gewählt wird, die wenigstens stückweise stetig ist, keine periodische Dreiecks- oder Rechtecksfunktion darstellt und sich im Vergleich zur Musterfunktion P(x,y) nur langsam ändert, wobei
- die Reliefstruktur mit einer Vielzahl von reflektiven Pixeln gebildet wird, die jeweils eine oder mehrere, gleich orientierte reflektive Facetten aufweisen, wobei eine Neigung jeder Facette gegen die x-y-Ebene durch die Angabe ihres normalisierten Normalenvektors bestimmt ist,
- die Reliefstruktur mit einer durch die x-Achse angegebene Vorzugsrichtung gebildet wird, so dass mehr als 80% der Facetten der Reliefstruktur einen in der y-z-Ebene liegenden Normalenvektor aufweisen, und
- das Perforationsmuster mit einer Vorzugsrichtung gebildet wird, die parallel zur x-Achse liegt, wobei die Vorzugsrichtung durch den oder einen Gittervektor des Gitters gegeben ist.

14. Verfahren nach Anspruch 13, **dadurch gekennzeichnet, dass** das Perforationsmuster gebildet wird, indem zunächst eine vollflächige reflektierende Schicht auf die Reliefstruktur aufgebracht wird, und die vollflächige reflektierende Schicht dann durch Laserbeaufschlagung oder durch den Einsatz von Waschfarben, mithilfe selektiver Ätztechniken, selektiver Lift-Off-Prozesse oder mithilfe eines selektiven Transferprozesses mit Perforationen versehen wird, um das gewünschte Perforationsmuster zu erzeugen.


**Claims**

1. Optically variable security element (12) for safeguarding valuable objects, having a carrier with a reflective surface region (20), the extent of which defines a xy-plane and a z-axis perpendicular thereto, **characterized in that**

- the reflective surface region (20) is partially transmissive and has a diffraction structure formed by an additive superimposition of a macroscopically or microscopically fine relief structure (32) and a microscopically fine perforation pattern (40), the diffraction structure (30) being described by a structure function S(x,y), the relief structure (32) being described by a relief function R(x,y), the perforation pattern (40) being described by a pattern function P(x,y) and the additive superimposition being described by

$$S(x,y) = R(x,y) + P(x,y),$$

- the perforation pattern (40) is formed by a reflective layer which has a multiplicity of microscopically fine perforations (42) and which on account of the additive superimposition follows the profile of the relief structure (32) and represents a light-diffractive or light-scattering, optically effective and partially transmissive coating of the relief structure (32), the perforation pattern being a one-dimensional or two-dimensional grating, and
- the relief function R(x,y) which describes the relief structure (32) is at least piecewise continuous, does not represent a periodic triangular or rectangular function and only changes slowly in comparison with the pattern function P(x,y), and **in that**
- the relief structure contains a multiplicity of reflective pixels which each have one or more reflective facets with the same orientation, with a tilt of each facet with respect to the xy-plane being determined by the specification of its normalized normal vector,
- the relief structure has a preferred direction specified by the x-axis such that more than 80% of the facets of the relief structure have a normal vector lying in the yz-plane, and

- the perforation pattern has a preferred direction parallel to the x-axis, the preferred direction being specified by the grating vector or a grating vector of the grating.

2. Security element according to Claim 1, **characterized in that** the relief function R(x,y) is a symmetric or asymmetric grid function with a grid period in at least one spatial direction of between 1 $\mu$m and 200 $\mu$m, preferably of between 5 $\mu$m and 200 $\mu$m.

3. Security element according to Claim 1, **characterized in that** the relief function R(x,y) is an aperiodic function in which adjacent extremal values in at least one spatial direction are spaced apart from one another by at least 1 $\mu$m and no more than 200 $\mu$m.

4. Security element according to at least one of Claims 1 to 3, **characterized in that** the relief structure has a structure height of 40 $\mu$m or less.

5. Security element according to at least one of Claims 1 to 4, **characterized in that** the one-dimensional or two-dimensional grating has a grating period in at least one spatial direction of between 0.1 $\mu$m and 10 $\mu$m.

6. Security element according to at least one of Claims 1 to 5, **characterized in that** the perforation pattern forms a wire grating, a square or hexagonal perforated grating or a square or hexagonal point grating.

7. Security element according to at least one of Claims 1 to 6, **characterized in that** the reflective layer of the perforation pattern is a layer made of metal, a metal alloy or a highly refractive material, in particular a layer made of Al, Ni, Co, Au, Ag, Cu, ZnS, $TiO_2$, ZnO or $SiO_2$.

8. Security element according to at least one of Claims 1 to 7, **characterized in that** the surface region contains at least two partial regions, each with a diffraction structure of the aforementioned type, wherein

   - the relief structures of the diffraction structures are pairwise different in the partial regions,
   - the perforation patterns of the diffraction structures each have a preferred direction and
   - the respective preferred directions of the perforation patterns of all partial regions are parallel to one another.

9. Security element according to at least one of Claims 1 to 8, **characterized in that** the surface region contains a first partial region with a first diffraction structure and a second partial region with a second diffraction structure, the second diffraction structure being in the form of a mirror image of the first diffraction structure.

10. Security element according to at least one of Claims 1 to 9, **characterized in that** the security element further has information, in particular a pattern, a sign or a code, arranged below the reflective partially transmissive surface region, the said information being recognizable when observed through the partially transmissive surface region.

11. Data carrier having a security element according to at least one of Claims 1 to 10.

12. Data carrier according to Claim 11, **characterized in that** the security element is arranged in or over a window region or a continuous opening in the data carrier.

13. Method for producing an optically variable security element (12) according to any one of Claims 1 to 10, wherein

   - a carrier is made available and provided with a reflective surface region (20), the extent of which defines a xy-plane and a z-axis perpendicular thereto,
   - the reflective surface region (20) is embodied to be partially transmissive and have a diffraction structure formed by an additive superimposition of a macroscopically or microscopically fine relief structure (32) and a microscopically fine perforation pattern (40), the diffraction structure being described by a structure function S(x,y), the relief structure (32) being described by a relief function R(x,y), the perforation pattern (40) being described by a pattern function P(x,y) and the additive superimposition being described by

$$S(x,y) = R(x,y) + P(x,y),$$

   - the perforation pattern (40) is formed by a reflective layer which has a multiplicity of microscopically fine perforations (42) and which on account of the additive superimposition follows the profile of the relief structure (32) and represents a light-diffractive or light-scattering, optically effective and partially transmissive coating of the relief structure (32), the perforation pattern being a one-dimensional or two-dimensional grating, and
- a relief function R(x,y) which describes the relief structure (32) and is at least piecewise continuous, does not represent a periodic triangular or rectangular function and only changes slowly in comparison with the pattern function P(x,y) is chosen, wherein
- the relief structure is formed with a multiplicity of reflective pixels which each have one or more reflective facets with the same orientation, with a tilt of each facet with respect to the xy-plane being determined by the specification of its normalized normal vector,
- the relief structure is formed with a preferred direction specified by the x-axis such that more than 80% of the facets of the relief structure have a normal vector lying in the yz-plane, and
- the perforation pattern is formed with a preferred direction parallel to the x-axis, the preferred direction being specified by the grating vector or a grating vector of the grating.

14. Method according to Claim 13, **characterized in that** the perforation pattern is formed by virtue of a layer that is reflective all over initially being applied to the relief structure and the layer that is reflective all over then being provided with perforations by laser impingement or by the use of washable inks, with the aid of selective etching techniques, with the aid of selective lift-off processes or with the aid of a selective transfer process in order to generate the desired perforation pattern.

## Revendications

1. Élément de sécurité optiquement variable (12) destiné à la protection de d'objets de valeurs, ledit élément de sécurité comprenant un support pourvu d'une zone de surface réfléchissante (20) dont l'étendue définit un plan x-y et un axe z perpendiculaire à celui-ci, **caractérisé en ce que**

   - la zone de surface réfléchissante (20) est partiellement transparente et présente une structure de diffraction qui est formée par superposition additive d'une structure en relief (32) macroscopiquement ou microscopiquement fine et d'un motif de perforations (40) microscopiquement fines, la structure de diffraction (30) étant décrite par une fonction de structure S(x,y), la structure en relief (32) étant décrite par une fonction de relief R(x,y), le motif de perforations (40) étant décrit par une fonction de motif P(x,y), et la superposition additive étant décrite par

$$S(x,y) = R(x,y) + P(x,y),$$

   - le motif de perforations (40) est formé par une couche réfléchissante comportant un grand nombre de perforations (42) microscopiquement fines qui, en raison de la superposition additive, suit le tracé de la structure en relief (32) et représente un revêtement de la structure en relief (32) qui diffracte ou diffuse la lumière, qui est optiquement actif et qui est partiellement transparent, le motif de perforations étant un réseau unidimensionnel ou bidimensionnel, et
   - la fonction de relief R(x,y) décrivant la structure en relief (32) est au moins continue par morceaux, ne représente pas une fonction périodique triangulaire ou rectangulaire et ne varie que lentement par rapport à la fonction de motif P(x,y), et **en ce que**
   - la structure en relief contient un grand nombre de pixels réfléchissants qui comportent chacun une ou plusieurs facettes réfléchissantes orientées de la même manière, une inclinaison de chaque facette par rapport au plan x-y étant déterminée par spécification de son vecteur normal normalisé,
   - la structure en relief présente une direction préférentielle donnée par l'axe x de sorte que plus de 80 % facettes de la structure en relief comportent un vecteur normal situé dans le plan yz, et
   - le motif de perforations présente une direction préférentielle qui est parallèle à l'axe x, la direction préférentielle étant donnée par le ou un vecteur de réseau du réseau.

2. Élément de sécurité selon la revendication 1, **caractérisé en ce que** la fonction de relief R(x,y) est une fonction de trame symétrique ou asymétrique avec une période de trame entre 1 $\mu$m et 200 $\mu$m, de préférence entre 5 $\mu$m et 200 $\mu$m, dans au moins une direction spatiale.

3. Élément de sécurité selon la revendication 1, **caractérisé en ce que** la fonction de relief R(x,y) est une fonction apériodique dans laquelle des valeurs extrêmes adjacentes dans au moins une direction spatiale sont espacées d'au moins 1 μm et d'au plus 200 μm.

4. Élément de sécurité selon l'une au moins des revendications 1 à 3, **caractérisé en ce que** la structure en relief a une hauteur de structure de 40 μm ou moins.

5. Élément de sécurité selon l'une au moins des revendications 1 à 4, **caractérisé en ce que** le réseau unidimensionnel ou bidimensionnel a une période de réseau comprise entre 0,1 μm et 10 μm dans au moins une direction spatiale.

6. Élément de sécurité selon l'une au moins des revendications 1 à 5, **caractérisé en ce que** le motif de perforations forme un réseau de fils, un réseau de trous carré ou hexagonal ou un réseau de points carré ou hexagonal.

7. Élément de sécurité selon l'une au moins des revendications 1 à 6, **caractérisé en ce que** la couche réfléchissante du motif de perforations est une couche en métal, en alliage métallique ou en matériau fortement réfractif, notamment une couche en Al, Ni, Co, Au, Ag, Cu, ZnS, $TiO_2$, ZnO ou $SiO_2$.

8. Élément de sécurité selon l'une au moins des revendications 1 à 7, **caractérisé en ce que** la zone de surface contient au moins deux sous-zones qui comportent chacune une structure de diffraction du type mentionné,

   - les structures en relief des structures de diffraction dans les sous-zones étant différentes deux à deux,
   - les motifs de perforations des structures de diffraction présentant chacun une direction préférentielle et
   - les directions préférentielles respectives des motifs de perforations de toutes les sous-zones étant parallèles entre elles.

9. Élément de sécurité selon l'une au moins des revendications 1 à 8, **caractérisé en ce que** la zone de surface contient une première sous-zone qui comporte une première structure de diffraction et une deuxième sous-zone qui comporte une deuxième structure de diffraction, la deuxième structure de diffraction étant une image spéculaire de la première structure de diffraction.

10. Élément de sécurité selon l'une au moins des revendications 1 à 9, **caractérisé en ce que** l'élément de sécurité comporte également une information, en particulier un motif, un caractère ou un code, qui est disposée sous la zone de surface partiellement transparente réfléchissante et qui peut être décelée par une observation faite à travers la zone de surface partiellement transparente.

11. Support de données comprenant un élément de sécurité selon l'une au moins des revendications 1 à 10.

12. Support de données selon la revendication 11, **caractérisé en ce que** l'élément de sécurité est disposé dans ou au-dessus d'une zone de fenêtre ou d'une ouverture traversante du support de données.

13. Procédé de fabrication d'un élément de sécurité optiquement variable (12) selon l'une des revendications 1 à 10, dans lequel

   - un support est fourni et pourvu d'une zone de surface réfléchissante (20) dont l'étendue définit un plan x-y et un axe z perpendiculaire à celui-ci,
   - la zone de surface réfléchissante (20) est partiellement transparente et est conçue avec une structure de diffraction qui est formée par superposition additive d'une structure en relief (32) macroscopiquement ou microscopiquement fine et un motif de perforations (40) microscopiquement fines, la structure de diffraction étant décrite par une fonction de structure S(x,y), la structure en relief (32) étant décrite par une fonction de relief R(x,y), le motif de perforations (40) étant décrit par une fonction de motif P(x,y), et la superposition additive étant décrite par

$$S(x,y) = R(x,y) + P(x,y),$$

   - le motif de perforations (40) est formé par une couche réfléchissante comportant un grand nombre de perforations (42) microscopiquement fines qui, en raison de la superposition additive, suit le tracé de la structure en relief (32) et représente un revêtement de la structure en relief (32) qui diffracte ou diffuse la lumière, qui est optiquement actif et qui est partiellement transparent, le motif de perforations étant un réseau unidimensionnel ou bidimensionnel, et

- la fonction de relief R(x,y) décrivant la structure en relief (32) est au moins continue par morceaux, ne représente pas une fonction périodique triangulaire ou rectangulaire et ne varie que lentement par rapport à la fonction de motif P(x,y),

- la structure en relief contenant un grand nombre de pixels réfléchissants qui comportent chacun une ou plusieurs facettes réfléchissantes orientées de la même manière, une inclinaison de chaque facette par rapport au plan x-y étant déterminée par spécification de son vecteur normal normalisé,

- la structure en relief présentant une direction préférentielle donnée par l'axe x de sorte que plus de 80 % facettes de la structure en relief comportent un vecteur normal situé dans le plan y-z, et

- le motif de perforations présente une direction préférentielle qui est parallèle à l'axe x, la direction préférentielle étant donnée par le ou un vecteur de réseau du réseau.

14. Procédé selon la revendication 13, **caractérisé en ce que** l'on forme le motif de perforations d'abord en appliquant une couche réfléchissante sur toute la surface sur la structure en relief, puis en dotant la couche réfléchissanté sur toute la surface de perforations, destinées à générer le motif de perforations souhaité, par impact laser ou à l'aide d'encres lavables par le biais de techniques de gravure sélective, de processus de décollement sélectifs ou d'un processus de transfert sélectif.

Fig. 1

Fig. 2

Fig. 3

Fig. 4

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010049831 A1
- US 2013093172 A1
- EP 1562758 B1